# FASCICULE DE BREVET EUROPEEN

(11) **EP 3 953 219 B1**
(45) Date de publication et mention de la délivrance du brevet: **04.03.2026**
(21) Numéro de dépôt: 20725783.3
(22) Date de dépôt: 09.04.2020
(51) Int. Cl.: B60R 22/24, B62D 25/02

(54) **RENFORT DE LONGERON INTERIEUR**
INNERE STRINGERVERSTÄRKUNG
INNER STRINGER REINFORCEMENT

(30) Priorité: 12.04.2019 FR 1903933
(43) Date de publication de la demande: 16.02.2022
(73) Titulaire: Stellantis Auto SAS, 78300 Poissy (FR)
(72) Inventeur: CORNEFERT, Arnaud, 94240 L'HAY LES ROSES (FR); SEVRIN, Alexandre, 91400 ORSAY (FR); GROSSET, Romain, 94230 CACHAN (FR)
(74) Mandataire: BCIP
(86) Numéro de dépôt international: PCT/FR2020/000103
(87) Numéro de publication internationale: WO 2020/208315

(56) Documents cités:
- EP-A1- 2 834 135
- DE-A1- 102015 106 812
- DE-A1- 102015 203 309
- DE-B3- 102012 020 432
- US-A1- 2004 012 230
- US-A1- 2013 264 840

## Description

L'invention a trait au domaine des véhicules automobiles, et plus particulièrement à la structure de bas de caisse d'un véhicule automobile et aux composants installés dans ce bas de caisse pour assurer la sécurité des passagers en cas de choc latéral.

La structure de bas de caisse des véhicules automobiles comprend classiquement un plancher délimité par des profilés de bas de caisse ou longerons latéraux, et entre lesquels sont situées des traverses d'assise avant et arrière. Lors d'un choc latéral les longerons latéraux sont sollicités et participent ainsi à la sécurité passive du véhicule. Parallèlement, les longerons latéraux peuvent également servir à fixer d'autres composants de la structure de bas de caisse, tels que les enrouleurs de ceinture de sécurité avant. Aussi, afin d'améliorer à la fois leur tenue mécanique en cas de choc latéral mais également la fixation des composants, il est courant d'augmenter l'épaisseur des longerons latéraux et/ou de rajouter des renforts.

Tel est le cas dans le document brevet publié FR3005915 et EP 2 834 135 A1 qui décrit un longeron latéral formé par l'association d'un longeron intérieur avec un longeron extérieur, lesquels longerons ont chacun une forme en U délimitant un corps creux. Ce longeron latéral comprend également un renfort fixé sur le longeron intérieur, et qui s'étend transversalement dans le corps creux. En plus de ce renfort, un support d'enrouleur de ceinture de sécurité est fixé à une portion verticale du longeron intérieur, en vis-à-vis dudit renfort. Bien que le renfort puisse présenter une double fonction, à savoir celle de renforcer la structure de bas de caisse à l'égard des chocs latéraux et celle de renforcer la fixation du support de l'enrouleur de ceinture de sécurité avant sur le longeron intérieur, la fixation de l'enrouleur sur le longeron intérieur est réalisée au moyen d'un support s'étendant le long de la portion verticale du longeron intérieur jusqu'au plancher du véhicule. Or, un tel support est en fait encombrant et constitue en plus une pièce supplémentaire à fabriquer, manipuler et fixer.

L'invention a pour objectif de pallier au moins un des inconvénients de l'état de la technique susmentionné. Plus particulièrement, l'invention a pour objectif de simplifier la fixation d'un enrouleur de ceinture de sécurité sur un longeron intérieur tout en consolidant également ce dernier élément, ceci de manière simple et facile à mettre en œuvre.

A cet effet, l'invention a pour objet une structure de bas de caisse de véhicule, avec deux côtés latéraux et comprenant à au moins un des deux côtés latéraux : un longeron intérieur présentant une section transversale en forme de U couché avec une portion verticale, une portion supérieure et une portion inférieure, et comportant une zone de fixation d'un enrouleur de ceinture de sécurité; un renfort de la zone de fixation, disposé dans le longeron intérieur; remarquable en ce que la zone de fixation est située sur la portion supérieure du longeron intérieur et en ce que le renfort est fixé à ladite portion supérieure et à au moins une des portions verticale et inférieure.

Selon un mode avantageux de l'invention, le renfort est en tôle emboutie formant au moins une équerre en contact avec le longeron intérieur et au moins un gousset de ladite au moins une équerre. L'au moins une équerre du renfort est au nombre de deux de manière à former une section en U avec une portion verticale, une portion supérieure et une portion inférieure, épousant la section en forme de U couché du longeron intérieur, l'au moins un gousset reliant lesdites portions verticales, supérieure et inférieure.

Selon un mode avantageux de l'invention, la zone de fixation comprend un ou plusieurs orifices dans la partie supérieure du longeron intérieur destinés à être traversés par une ou des vis de fixation de l'enrouleur.

Selon un mode avantageux de l'invention, le renfort comprend un ou plusieurs orifices alignés avec le ou les orifices de la partie supérieure du longeron, de manière à pouvoir être traversés par la ou les vis de fixation.

Selon un mode avantageux de l'invention, le renfort comprend un embouti supérieur et un embouti inférieur, lesdits emboutis étant fixés l'un à l'autre.

Selon un mode avantageux de l'invention, la structure comprend la ou les vis de fixation, ladite ou lesdites vis traversant le ou les orifices du renfort pratiqués sur l'embouti supérieur et rigidement fixées audit embouti.

Selon un mode avantageux de l'invention, chacun des emboutis supérieur et inférieur forme une équerre avec, à au moins une extrémité longitudinale, une portion transversale, les portions transversales desdits emboutis se superposant mutuellement pour former l'au moins un gousset.

Selon un mode avantageux de l'invention, l'au moins une portion transversale de chacun des emboutis supérieur et inférieur est une superposition et fixation de deux portions de tôle, ladite superposition étant obtenue par pliage dudit embouti.

L'invention a également pour objet un procédé d'assemblage d'une structure de bas de caisse de véhicule automobile, comprenant les étapes suivantes : (a) mise en place et fixation d'un renfort dans un longeron intérieur à au moins un des deux côtés latéraux de la structure de bas de caisse ; (b) mise en place et fixation d'un longeron extérieur sur chacun de l'au moins un longeron intérieur ; remarquable en ce que la structure de bas de caisse est conforme à l'invention, le renfort comprenant un embouti supérieur et un embouti inférieur, lesdits emboutis étant fixés l'un à l'autre, et, à l'étape (a), l'embouti supérieur est mis en place avant l'embouti inférieur.

Les mesures de l'invention sont intéressantes en ce que la fixation de l'enrouleur de ceinture de sécurité sur la portion supérieure du longeron intérieur procure un gain de place en vis-à-vis de la portion verticale, alors que le renfort de la zone de fixation agit directement sur la portion supérieure et évite ainsi un déplacement de celle-ci vers le haut, susceptible de déplacer vers le haut l'enrouleur de ceinture de sécurité. La forme du renfort de la zone de fixation de l'enrouleur de ceinture de sécurité en au moins une équerre ou en deux équerres, dont une supérieure et une inférieure, en contact avec le longeron intérieur participe en fait au renforcement efficace de la zone de fixation de l'enrouleur et du longeron intérieur. En effet, la configuration du renfort est telle qu'elle a en particulier pour effet de verrouiller l'angle supérieur du longeron intérieur du longeron latéral mais aussi, dans le cas d'un renfort à deux équerres, l'angle inférieur de ce même longeron intérieur. Parallèlement, le fait que les vis de fixation de l'enrouleur de ceinture de sécurité soient également directement intégrées sur le renfort de la zone de fixation facilite le montage de celui-ci dans le longeron intérieur.

D'autres caractéristiques et avantages de la présente invention seront mieux compris à l'aide de la description et des dessins.
[Fig 1] est une vue en perspective d'un longeron intérieur d'une structure de bas de caisse d'un véhicule automobile selon l'invention ;
[Fig 2] représente une vue d'une coupe transversale du longeron intérieur de la structure de bas de caisse de la figure 1 ;
[Fig 3] illustre une vue en perspective et éclatée du renfort de la zone de fixation sur le longeron intérieur de la structure de bas de caisse des figures 1 et 2 ;

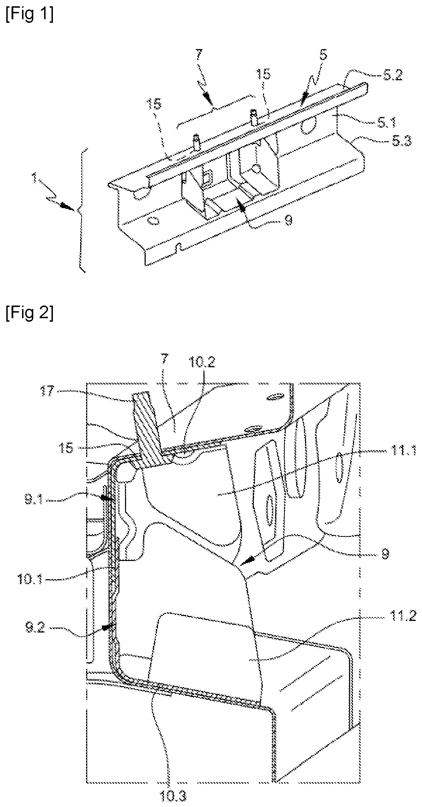

La figure 1 est une vue en perspective d'une portion de structure de bas de caisse d'un véhicule automobile selon l'invention. La structure de bas de caisse comprend en fait une poutre de chaque côté, chaque poutre étant un assemblage de deux longerons, un intérieur et un extérieur. En l'occurrence la figure 1 montre seulement le longeron intérieur 5. Ce longeron intérieur 5 présente une section transversale en forme de U couché avec une portion verticale 5.1, une portion supérieure 5.2 et une portion inférieure 5.3, l'ensemble formant un corps creux dirigé vers l'extérieur du véhicule (non représenté). Sur la portion supérieure 5.2 du longeron intérieur 5 est notamment située une zone de fixation 7 d'un enrouleur de ceinture de sécurité (non représenté) et au sein du corps creux de ce même longeron intérieur 5, un renfort 9 de cette zone de fixation 7. Ce renfort 9 de la zone de fixation 7 est également arrimé sur la portion supérieure 5.2 du longeron intérieur 5 et au moins à une des portions verticale 5.1 et inférieure 5.3 de celui-ci. Outre le fait, de servir à renforcer la zone de fixation 7 de l'enrouleur de ceinture de sécurité (non représenté), il sert dans un premier temps à renforcer le longeron intérieur 5 lorsque le longeron latéral est soumis à un choc latéral.

La figure 2 est une vue d'une coupe transversale du longeron intérieur 5 de la portion de la structure de bas de caisse 1 de la figure 1, dans lequel est fixé un renfort de la zone de fixation d'un enrouleur de ceinture de sécurité. Ce renfort 9 est réalisé en tôle emboutie et il comprend en particulier un embouti supérieur 9.1 et un embouti inférieur 9.2 fixés l'un à l'autre. Chacun des emboutis supérieur 9.1 et inférieur 9.2 forment en fait une équerre, les deux équerres étant agencées ensemble de manière à former une section en U qui présente une portion verticale 10.1, une portion supérieure 10.2 et une portion inférieure 10.3, laquelle section en U épouse ainsi la section en U couché du longeron intérieur 5. Parallèlement, les équerres de l'embouti supérieur 9.1 et de l'embouti inférieur 9.2 ont à au moins une de leur extrémité longitudinale, une portion transversale 11.1 ; 11.2. Comme illustré sur la figure 2, ces portions transversales 11.1 ; 11.2 se superposent mutuellement pour former au moins un gousset du renfort 9 de la zone de fixation 7. Le gousset relie en fait les portions verticale 10.1, supérieure 10.2 et inférieure 10.3 de la section en U du renfort 9 de la zone de fixation 7 (voir aussi figure 1).

Avantageusement le renfort 9 de la zone de fixation 7 de la structure de bas de caisse 1 selon l'invention peut former au moins une équerre en contact avec le longeron intérieur 5, laquelle équerre formant également au moins un gousset. Cette alternative n'a pas été choisie d'être illustrée.

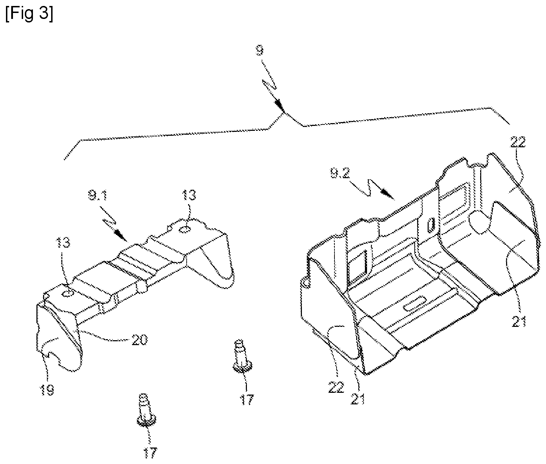

La figure 3 montre une vue en perspective et éclatée du renfort 9 de la zone de fixation 7 des figures 1 et 2. Les emboutis supérieur 9.1 et inférieur 9.2 du renfort 9, qui sont chacun en forme d'équerre avec au moins un gousset, sont représentés sur cette figure 3 lorsqu'ils ne sont pas encore assemblés l'un à l'autre sur le longeron intérieur 5 (non représenté sur la figure 3, voir les figures 1 et 2). En général, l'embouti supérieur 9.1 comprend en particulier un ou plusieurs orifices 13 qui sont respectivement alignés avec un ou plusieurs orifices 15 (voir les figure 1 et 2) situés sur la partie supérieure 5.2 du longeron intérieur 5, partie sur laquelle se trouve la zone de fixation 7 (voir les figures 1 et 2) de l'enrouleur de ceinture de sécurité (non représenté sur la figure 3). Ces orifices 13 sont alignés de manière à pouvoir être traversés par la ou les vis de fixation 17 de l'enrouleur de ceinture de sécurité (voir aussi figures 1 et 2) ou tout autre système de fixation tels que des écrous. En l'occurrence sur la figure 3, l'embouti supérieur 9.1 comprend deux orifices 13, chacun étant apte à être traversés par une vis de fixation 17 ou bien entendu par tout autres moyens de fixation connus de l'homme du métier, tels que par exemple des écrous et des rivets.

Toutefois, il est à noter que les moyens de fixation du renfort 9 de la zone de fixation 7, à la partie supérieure 5.2 du longeron intérieur 5 ainsi qu'à l'enrouleur de ceinture de sécurité, sont préférentiellement des vis 17 qui sont préalablement fixées rigidement sur l'embouti supérieur 9.1 de ce renfort 9 (voir figures 1 et 2).

La figure 3 permet également d'observer que l'au moins une portion transversale de chacun des emboutis supérieur 9.1 et inférieur 9.2 du renfort 9 de la zone de fixation 7, est en fait une superposition et fixation de deux portions de tôle 19, 20 ; 21, 22 de chacun des emboutis 9.1, 9.2 du renfort 9. Cette superposition est notamment réalisée par pliage de chacune des deux portions de tôle 19, 20 ; 21, 22 des emboutis 9.1, 9.2 considérés.

Concernant plus particulièrement le procédé d'assemblage d'une structure de bas de caisse selon l'invention. Ce procédé consiste en deux étapes, à savoir dans un premier temps à la mise en place et à la fixation d'un renfort de la zone de fixation d'un enrouleur de ceinture de sécurité, selon l'invention, dans un longeron intérieur à au moins un des deux côtés latéraux de la structure de bas de caisse. Puis dans un deuxième temps, à la mise en place et à la fixation d'un longeron extérieur sur chacun des longerons intérieurs, donnant lieu ainsi une fois assemblée, aux longerons latéraux de la structure de bas de caisse du véhicule considéré.

S'agissant de la première étape du procédé d'assemblage, lorsque le renfort de la zone de fixation est en particulier formé par un embouti supérieur et un embouti inférieur, l'embouti supérieur est en fait positionné et fixé en premier lieu dans le longeron intérieur des longerons latéraux de la structure de bas de caisse. En effet, du fait que les vis de fixation sont préférablement rigidement fixées au préalable au travers des orifices de l'embouti supérieur, la mise en place de cet embouti, pour des raisons de commodités, doit donc être réalisée avant la mise en place de l'embouti inférieur. En pratique, le positionnement de l'embouti supérieur dans la portion supérieure du longeron intérieur se fait par un léger basculement/rotation de celui-ci de manière à permettre aux vis de fixation de venir traverser les orifices de la portion supérieure du longeron intérieur pour permettre la fixation ultérieure de l'enrouleur de ceinture de sécurité. Une fois l'embouti supérieur fixé, l'embouti inférieur est positionné dans la partie inférieure du longeron intérieur et contre l'embouti supérieur, l'ensemble forme ainsi une section transversale en forme de U qui épouse la section en U couché du longeron intérieur. Les portions transversales de chacun des emboutis supérieur et inférieur sont en particulier agencées de manière à se superposer et former au moins un gousset qui relie les portions verticale, supérieure et inférieure de la section en U. Avantageusement, les parties superposées des emboutis supérieur et inférieur sont soudées par des points de soudure électrique.

De façon générale, cette invention est d'autant plus intéressante qu'en plus de renforcer les longerons intérieurs des structures de bas de caisse et la fixation des enrouleurs de ceinture de sécurité sur ces longerons, elle est aisée à mettre en place et n'entraîne pas une augmentation de la masse du véhicule. Par ailleurs, lorsque le renfort de la zone de fixation comprend en particulier un embouti supérieur et un embouti inférieur, l'embouti inférieur présente l'avantage de pouvoir être décliné, selon les critères de sécurité souhaités.

## Revendications

1. Structure de bas de caisse (1) de véhicule, avec deux côtés latéraux et comprenant à au moins un des deux côtés latéraux :
- un longeron intérieur (5) présentant une section transversale en forme de U couché avec une portion verticale (5.1), une portion supérieure (5.2) et une portion inférieure (5.3), et comportant une zone de fixation (7) d'un enrouleur de ceinture de sécurité;
- un renfort (9) de la zone de fixation (7), disposé dans le longeron intérieur (5);
**caractérisé en ce que**
la zone de fixation (7) est située sur la portion supérieure (5.2) du longeron intérieur (5) et **en ce que** le renfort (9) est fixé à ladite portion supérieure (5.2) et à au moins une des portions verticale (5.1) et inférieure (5.3).

2. Structure de bas de caisse (1) selon la revendication 1, **caractérisée en ce que** le renfort (9) est en tôle emboutie formant au moins une équerre en contact avec le longeron intérieur (5) et au moins un gousset de ladite au moins une équerre, l'au moins une équerre du renfort (9) est au nombre de deux de manière à former une section en U avec une portion verticale (10.1), une portion supérieure (10.2) et une portion inférieure (10.3), épousant la section en forme de U couché du longeron intérieur, l'au moins un gousset reliant lesdites portions verticales (10.1), supérieure (10.2) et inférieure (10.3).

3. Structure de bas de caisse (1) selon l'une des revendications 1 à 2, **caractérisée en ce que** la zone de fixation (7) comprend un ou plusieurs orifices (13) dans la partie supérieure (5.1) du longeron intérieur (5) destinés à être traversés par une ou des vis de fixation (17) de l'enrouleur.

4. Structure de bas de caisse (1) selon la revendication 3 **caractérisée en ce que** le renfort (9) comprend un ou plusieurs orifices (15) alignés avec le ou les orifices (13) de la partie supérieure (5.2) du longeron (5), de manière à pouvoir être traversés par la ou les vis de fixation (17).

5. Structure de bas de caisse (1) selon l'une des revendications 1 à 4, **caractérisée en ce que** le renfort (9) comprend un embouti supérieur (9.1) et un embouti inférieur (9.2), lesdits emboutis (9.1), (9.2) étant fixés l'un à l'autre.

6. Structure de bas de caisse (1) selon les revendications 4 et 5, **caractérisée en ce que** la structure (1) comprend la ou les vis de fixation (17), ladite ou lesdites vis (17) traversant le ou les orifices (13) du renfort (9) pratiqués sur l'embouti supérieur (9.1) et rigidement fixées audit embouti (9.1).

7. Structure de bas de caisse (1) la revendication 2, et selon l'une des revendications 5 et 6, **caractérisée en ce que** chacun des emboutis supérieur (9.1) et inférieur (9.2) forme une équerre avec, à au moins une extrémité longitudinale, une portion transversale (11.1), (11.2), les portions transversales (11.1), (11.2) desdits emboutis (9.1), (9.2) se superposant mutuellement pour former l'au moins un gousset.

8. Structure de bas de caisse (1) selon la revendication 7 **caractérisée en ce que** l'au moins une portion transversale (11.1), (11.2) de chacun des emboutis supérieur (9.1) et inférieur (9.2) est une superposition et fixation de deux portions de tôle (19), (20), (21), (22) ladite superposition étant obtenue par pliage dudit embouti (9.1), (9.2).

9. Procédé d'assemblage d'une structure de bas de caisse (1) de véhicule automobile, comprenant les étapes suivantes :
(a) mise en place et fixation d'un renfort (9) dans un longeron intérieur (5) à au moins des deux côtés latéraux de la structure de bas de caisse (1);
(b) mise en place et fixation d'un longeron extérieur sur chacun de l'au moins un longeron intérieur (5);
**caractérisé en ce que**
la structure de bas de caisse (1) est selon la revendication 6, et, à l'étape (a),
l'embouti supérieur (9.1) est mis en place avant l'embouti inférieur (9.2).

## Patentansprüche

1. Fahrzeugbodenstruktur (1) mit zwei Seitenseiten, die an mindestens einer der beiden Seitenseiten folgendes umfasst:
- einen inneren Längsträger (5) mit liegendem U-förmigem Querschnitt mit einem vertikalen Abschnitt (5.1), einem oberen Abschnitt (5.2) und einem unteren Abschnitt (5.3) und mit einem Befestigungsbereich (7) eines Sicherheitsgurtaufrollers, wobei der vertikale Abschnitt eine Basis des U ist, der obere Abschnitt einer der Schenkel des U ist und der untere Abschnitt der andere Schenkel des U ist;
- eine im Innenlängsträger (5) angeordnete Verstärkung (9) des Befestigungsbereiches (7);
**dadurch gekennzeichnet, dass**
Der Befestigungsbereich (7) befindet sich auf dem oberen Abschnitt (5.2) des inneren Längsträgers (5) und dadurch, dass die Verstärkung (9) an dem oberen Abschnitt (5.2) und an mindestens einem der vertikalen Abschnitte (5.1) und unteren Abschnitte (5.3) befestigt ist.

2. Unterkastenstruktur (1) nach Anspruch 1, **dadurch gekennzeichnet, dass** die Verstärkung (9) aus gepresstem Blech besteht, das mindestens einen Winkel bildet, der in Kontakt mit dem inneren Längsträger (5) steht, und mindestens einen Zwickel des mindestens einen Winkels bildet, wobei der mindestens eine Winkel der Verstärkung (9) zwei ist, um einen U-förmigen Abschnitt mit einem vertikalen Abschnitt (10.1), einem oberen Abschnitt (10.2) und einem unteren Abschnitt (10.3) zu bilden, der sich an den liegenden U-förmigen Abschnitt des inneren Längsträgers anpasst, Mindestens ein Zwickel, der die vertikalen (10.1), oberen (10.2) und unteren (10.3) Abschnitte verbindet.

3. Unterbodenstruktur (1) nach einem der Ansprüche 1 bis 2, **dadurch gekennzeichnet, dass** der Befestigungsbereich (7) eine oder mehrere Öffnungen (13) im oberen Teil (5.1) des inneren Längsträgers (5) aufweist, die von einer oder mehreren Befestigungsschrauben (17) der Aufwickelvorrichtung durchsetzt werden sollen.

4. Unterbodenstruktur (1) nach Anspruch 3, **dadurch gekennzeichnet, dass** die Verstärkung (9) eine oder mehrere Öffnungen (15) aufweist, die mit der oder den Öffnungen (13) des oberen Teils (5.2) des Längsträgers (5) fluchten, sodass sie von der oder den Befestigungsschrauben (17) durchsetzt werden können.

5. Unterkastenstruktur (1) nach einem der Ansprüche 1 bis 4, **dadurch gekennzeichnet, dass** die Verstärkung (9) eine obere Anformung (9.1) und eine untere Anformung (9.2) umfasst, wobei die Anformungen (9.1), (9.2) aneinander befestigt sind.

6. Unterkastenstruktur (1) nach den Ansprüchen 4 und 5, **dadurch gekennzeichnet, dass** die Struktur (1) die Befestigungsschraube oder -schrauben (17) umfasst, wobei die Schraube oder die Schrauben (17) die Öffnung oder die Öffnungen (13) der Verstärkung (9) durchqueren, die an der oberen Ausstanzung (9.1) ausgebildet und starr an der Ausstanzung (9.1) befestigt sind.

7. Unterbodenstruktur (1) nach Anspruch 2 und nach einem der Ansprüche 5 und 6, **dadurch gekennzeichnet, dass** jedes der oberen (9.1) und unteren (9.2) Prägeelemente einen Winkel bildet, der an wenigstens einem Längsende einen Querabschnitt (11.1), (11.2) aufweist, wobei die Querabschnitte (11.1), (11.2) der Prägeelemente (9.1), (9.2) einander überlappen, um den wenigstens einen Zwickel zu bilden.

8. Unterkastenstruktur (1) nach Anspruch 7, **dadurch gekennzeichnet, dass** der mindestens eine Querabschnitt (11.1), (11.2) jedes der oberen (9.1) und unteren (9.2) Ziehstempel eine Überlagerung und Befestigung von zwei Blechabschnitten (19), (20), (21), (22) ist, wobei die Überlagerung durch Biegen des Ziehstempels (9.1), (9.2) erhalten wird.

9. Verfahren zum Zusammenbauen einer Unterbodenstruktur (1) eines Kraftfahrzeugs, das die folgenden Schritte umfasst:
(a) Anbringen und Befestigen einer Verstärkung (9) in einem inneren Längsträger (5) an mindestens beiden Seiten der Unterbodenkonstruktion (1);
(b) Anbringen und Befestigen eines Außenholms an jedem der mindestens einen Innenholme (5);
**dadurch gekennzeichnet, dass**
Unterbodenstruktur (1) nach Anspruch 6, wobei in Schritt (a) das obere Ansatzstück (9.1) vor dem unteren Ansatzstück (9.2) angeordnet ist.

## Claims

1. Vehicle underbody structure (1), with two side sides and comprising at least one of the two side sides:
- an inner spar (5) having a U-shaped cross section lying with a vertical portion (5.1), an upper portion (5.2) and a lower portion (5.3), and having a zone (7) for fastening a safety belt reel, the vertical portion being a U-shaped base, the upper portion being one of the branches of the U and the lower portion being the other branch of the U;
reinforcement (9) of the fixing zone (7), arranged in the inner spar (5);
**characterised in that**
the fixing zone (7) is located on the upper portion (5. 2) of the inner spar (5) and **in that** the reinforcement (9) is fixed to said upper portion (5. 2) and to at least one of the vertical (5. 1) and lower (5. 3) portions.

2. Body base structure (1) according to claim 1, wherein the reinforcement (9) is made of stamped sheet metal forming at least one bracket in contact with the inner spar (5) and at least one gusset of said at least one bracket, the at least one bracket of the reinforcement (9) is at the quantity of two so as to form a U-shaped section with a vertical portion (10.1), an upper portion (10.2) and a lower portion (10.3), matching the recumbent U-shaped section of the inner spar, the at least one gusset connecting said vertical portions (10.1), upper (10.2) and lower (10.3).

3. Body base structure (1) according to one of Claims 1 to 2, **characterised in that** the fixing zone (7) comprises one or more orifices (13) in the upper part (5.1) of the inner spar (5) intended to be traversed by one or more fixing screws (17) of the winder.

4. Body base structure (1) according to Claim 3, **characterised in that** the reinforcement (9) comprises one or more orifices (15) aligned with the orifice(s) (13) of the upper part (5.2) of the spar (5), so as to be able to be traversed by the fixing screw(s) (17).

5. Body base structure (1) according to one of Claims 1 to 4, **characterised in that** the reinforcement (9) comprises an upper stamped portion (9.1) and a lower stamped portion (9.2), said stamped portions (9.1), (9.2) being fixed to each other.

6. Body base structure (1) according to Claims 4 and 5, **characterised in that** the structure (1) comprises the fixing screw(s) (17), said screw(s) (17) passing through the orifice(s) (13) of the reinforcement (9) made on the upper stamped portion (9.1) and rigidly fixed to said stamped portion (9.1).

7. Body base structure (1) according to claim 2, and according to one of claims 5 and 6, **characterised in that** each of the upper (9.1) and lower (9.2) stamped portions forms a right angle with, at at least one longitudinal end, a transverse portion (11.1), (11.2), the transverse portions (11.1), (11.2) of said stamped portions (9.1), (9.2) being mutually superposed to form the at least one gusset.

8. Body base structure (1) according to Claim 7, **characterised in that** the at least one transverse portion (11.1), (11.2) of each of the upper (9.1) and lower (9.2) stamped portions is a superposition and fixing of two sheet metal portions (19), (20), (21), (22), said superposition being obtained by folding said stamped portion (9.1), (9.2).

9. Method for assembling a motor vehicle underbody structure (1), comprising the following steps:
(a) positioning and securing a reinforcement (9) in an inner spar (5) on at least both lateral sides of the underbody structure (1);
(b) placing and fixing an outer spar on each of the at least one inner spar (5);
**characterised in that**
the body base structure (1) is according to claim 6, and, in step (a), the upper stamped part (9.1) is placed before the lower stamped part (9.2).
